# EUROPEAN PATENT SPECIFICATION

(11) **EP 0 670 086 B1**
(45) Date of publication and mention of the grant of the patent: **02.10.1996**
(21) Application number: 94900908.8
(22) Date of filing: 22.11.1993
(51) Int. Cl.: H02G 3/22, F16L 5/02

(54) **MULTIPLE CABLE WALL GLAND**
VERSCHRAUBUNG ZUM EINFÜHREN MEHRERER KABEL DURCH EINE WAND
PASSE-CABLE A CABLES MULTIPLES POUR MURS

(30) Priority: 23.11.1992 GB 9224505
(43) Date of publication of application: 06.09.1995
(73) Proprietor: A.C. EGERTON LIMITED, Orpington Kent BR5 3QU (GB)
(72) Inventor: THOMPSON, Charles Sydney, Nr. Edenbridge, Kent TN8 7BB (GB); THOMPSON, Roy Frederick, Hever, Kent TN8 7LH (GB)
(74) Representative: Downing, Michael Philip
(86) International application number: GB9302398
(87) International publication number: WO9413047

(56) References cited:
- WO-A-84/00646
- DE-U- 6 909 048

## Description

This invention relates to a multiple cable wall gland.

It is often required with cables and/or tubes of various kind, such as telecommunication and cable-television cables, to be able to pass them through a bulkhead or a wall such as a wall of a waterproof jointing box or a connector compartment for example, in such a manner that the entry opening through the wall is sealed with respect to the wall and the cable and/or tube whereby passage of fluid from one side of the wall to the other is prevented.

This has previously been achieved, with respect to single cables, by means of a gland member sealingly surrounding the cable or tube, and sealingly connected to the wall around the entry opening therethrough.

It has also been proposed to provide a single wall gland for a plurality of cables and/or tubes utilising a single wall opening, the plurality of cables and/or tubes passing, within a hollow gland member, individually through appropriate bores in a sealing member arranged to be compressed and seal about the plurality of cables and/or tubes.

WO-A-84/00646 discloses a stuffing tube for the decks and bulkheads of ships, which includes a tubular body having portions of two diameters interconnected by a tapered shoulder. An adapter having a tapered portion complementary to that of the tubular body fits inside, the adapter having a short cylindrical section dimensioned to fit over the cable. A seal comprising a strip of resilient material with an annealed wire core is wrapped around the cable and one end of it is engaged within the tapered adapter. The opposite end is engaged by a flat washer which has an inside diameter comparable to that of the cylindrical section of the adapter. A gland nut compresses the seal pressing inwardly on the flat washer. Different cable sizes are accommodated within the single tubular body by varying the dimensions of the adapter, seal and flat washer.

It is an object of the present invention to enable the provision of a convenient and easy to use sealed gland for such a plurality of cables and/or tubes.

In accordance with one aspect of the invention there is provided a gland assembly for enabling a plurality of cables and/or tubes to pass through a wall in a sealed manner comprising a hollow main gland body sealingly connectable directly or indirectly to the wall at an opening therein and extending generally transverse, in use, from the plane of the wall, from an inner end to an outer end; an inner disposed sleeve member and outer disposed sleeve member located within the main gland body in line with each other between the inner and outer ends of the main gland body, the inner and outer sleeve members being at least partially closed ended at their inner and outer ends respectively; sealing material disposed within the two sleeve members; the assembly being capable of adjustment to a first disposition such that little or no force in the inner/outer direction is imposed upon the sleeve ends which are then in an aligned separated disposition; the main gland body, the two sleeve ends and the sealing material being capable of having cables and/or tubes passed therethrough between the outer and inner ends thereof when the sleeves are in an aligned separated disposition; and the assembly being capable of a further adjustment to a second disposition such that force in the inner/outer direction is imposed upon the sleeve ends so as to urge the sleeves together and exert pressure on the sealing material in the inner/outer direction whereby to provide a seal about cables and/or tubes passing therethrough.

In accordance with another aspect of the invention there is provided a gland assembly for enabling a plurality of cables and/or tubes to pass through a wall in a sealed manner comprising a hollow main gland body sealingly connectable directly or indirectly to the wall at an opening therein and extending generally transverse, in use, from the plane of the wall, from an inner end to an outer end; an inner disposed sleeve member and outer disposed sleeve member located within the main gland body in line with each other between the inner and outer end of the main gland body, the inner and outer sleeve members having transverse wall members at their inner and outer ends respectively; the sleeve members enclosing a sealing member, at least a portion of which, full width across at least one sleeve member, is of elastomeric sealing material; the transverse wall members of the sleeve members and the sealing member being provided with bores therethrough in an inner/outer direction; the main gland body being capable of outward movement to a first disposition such that in use little or no force in the inner/outer direction is imposed upon the sleeve ends which are thereby in an aligned separated disposition and the elastomer material is uncompressed for the insertion of cables and/or tubes in the bores; and the main gland body being capable of inward movement to a second disposition such that, in use, force in the inner/outer direction is imposed upon the sleeve ends so as to urge the sleeve members together and exert pressure on the elastomer sealing material in the inner/outer direction to compress the same and provide a seal about the cables and/or tubes passing therethrough.

The sleeve members may be cylindrical and the seal member may comprise a cylinder of elastomeric material, or may, along its length, comprise a lamination or succession of elastomeric portions and non-elastomeric relatively rigid portions. Again the seal member may comprise a plastic central cylinder of a relatively rigid nature, with cylindrical elastomeric portions at each end thereof, which may be bonded to the central cylinder.

The main gland body may be connectable directly to the wall about the opening therein, for example by means of a threaded upstanding annular skirt formed about the opening.

Alternatively, the main gland body may be connectable to a separate annular skirt member secured within and sealed with respect to a simple opening in the wall.

The skirt or skirt portion upstanding from the wall may be internally threaded, and may in practice mate with an externally threaded portion of the main gland body which is itself conveniently of a right cylindrical nature. In this case inward and outward movement of the main gland body may be by screwing in and out on the skirt or skirt portion.

The skirt or skirt portion of the wall may be provided with a radially inwardly directed shoulder arranged to bear against the inner sleeve member adjacent the closed end thereof, and the outer end of the main gland body may be provided with a radially inwardly extending shoulder engaging with the closed end of the outer sleeve member.

The ends of the sleeve members, and the sealing member, may be pre-drilled with a predetermined number of bores, those not required for use at any time being filled, for sealing purposes, with rods passing therealong which can then, in use of the sealing gland, be sealed therewithin.

The main gland body may be sealed against the skirt or skirt portion of the wall by means of a sealing ring disposed on an outwardly inclined surface around the outer periphery of the inner sleeve member, which is engagable by the inner end of the main gland body and the skirt or skirt portion.

The ends of the sleeve members facing each other may be plain square cut ends for making contact with each other, or may be arranged for a telescopic sliding arrangement one within the other.

Means may be provided for applying pressure to the elastomer sealing material transverse to the inner/outer direction of the sleeve members, and in one embodiment of the invention where a elastomer portion of the sealing member is disposed adjacent the junction of the two sleeve members, the two sleeve members have, at their ends facing each other, an outwardly tapering inner wall on one, and peripherally separated and axially extending digits on the other such that upon compression thereof by inward movement of the main gland body, the digits of the one sleeve member are engaged by the inclined surface of the other member to bear radially inwardly into the elastomer of the sealing member, and thereby provide radial compression of the sealing member in addition to the axial compression provided by the closed ends of the sleeve members.

The bores through the sleeve ends and sealing member may be of any convenient configuration for the cables and/or tubes to be accommodated. Thus, they may be circular in section, or oval in section, or, for example where cables associated with cable-television, are to be passed through the gland, they may for example be of a figure of eight configuration so as to take the combined television and telecommunication cables associated with cable-television. In such a situation the configuration of the array of bores will be chosen through the sealing member to provide optimum capacity of cable passage, with satisfactory sealing properties.

The rods for sealing unwanted bores may initially be formed as plastic rods interconnected at one end fitting within all of the bores provided through the ends of the sleeves and the sealing member, whereby on use of the gland assembly the required number of rods can be broken away and removed.

In order that the invention may be more readily understood a number of embodiments thereof will now be described by way of example with reference to the accompanying drawings in which:-
Figure 1 is a sectional elevation of a sealing gland in accordance with the invention coupled to a cylindrical surround to an opening in a wall;
Figure 2 shows an array of bores through the sealing member of Figure 1;
Figure 3 shows an alternative configuration of bores through a sealing member to that of Figure 2;
Figure 4 shows an alternative to the skirt portion of the wall of Figure 1; and
Figure 5 shows an alternative configuration of the mating ends of the cylindrical sleeve members of Figure 1.

Referring now to the drawings it will be seen that the main cylindrical gland body 1 is arranged to engage at its inner end 2 by means of external threading 3 with internal threading 4 on an upstanding cylindrical skirt 5 surrounding an aperture 6 through a wall 7. Limit to screwed engagement of the main gland body 1 with the skirt portion of the wall is provided by means of an annular shoulder 8 on the main gland body 1.

Disposed within the main gland body 1 are two cylindrical sleeve members 9,10, an outer one 10 being closed at its outer end 11 and held within the gland body 1 by means of a radially inwardly directed shoulder 12 at the outer end thereof.

The inner sleeve member 9 is closed ended at 13, and is held by a radially inwardly directed shoulder 14 surrounding the aperture 6 below the skirt portion 5 surrounding it.

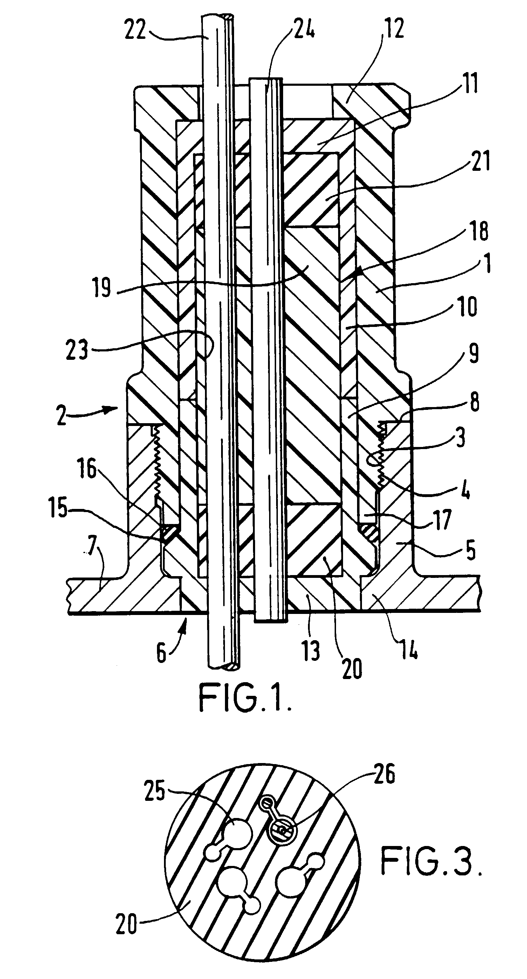

It is to be observed that in the fully screwed in position of the gland body shown in Figure 1, the two sleeves 9,10 mate with each other. In addition, an outwardly inclined surface 15 of the outer wall of the inner sleeve locates a resilient elastomeric "0" ring 16 forced outwardly on the inclined surface 15 by an inner edge 17 of the main gland body so as to form a seal between the skirt 5, the main gland body 1, and the inner sleeve 9, thereby providing a seal around the inner sleeve member 9 with respect to the other side of the wall 7 remote from the gland assembly.

Disposed within the two sleeve members 9,10 is a sealing member 18 which comprises a central cylinder 19 of relatively rigid plastics material bonded to which at each end is a shorter cylinder 20,21 of elastomeric material, such as polyurethane rubber.

It is to be appreciated that the main gland body 1, the two sleeve members 9,10, and the central cylinder 19 of the sealing member 18, may all be formed of an appropriate generally rigid plastics material such as nylon.

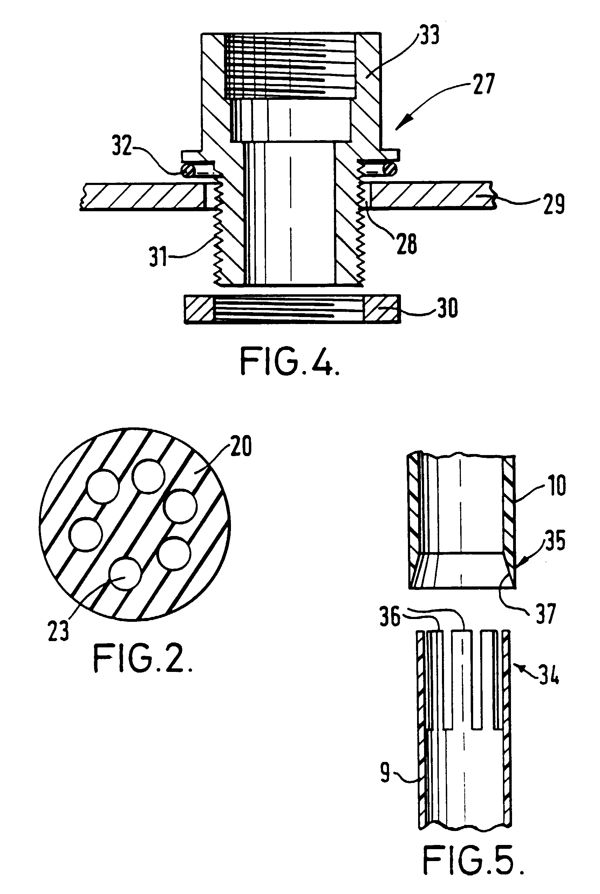

Before screwing into the skirt portion 5 surrounding the opening 6 in the wall 7, the natural relaxed condition of the elastomeric portions 20,21 of the sealing member 18 will hold separate the two sleeve members 9,10. Whilst in this condition, it is possible to pass cables such as 22 through bores 23 formed longitudinally through the closed ends 11,13 of the sleeves 9,10 and through the sealing member 18. One configuration of such bores is illustrated in Figure 2.

It will be appreciated that unused bores can, in order to enable full sealing of the gland assembly with only some bores occupied by cables, be filled with appropriate rods 24 as shown in Figure 1.

In practice it is convenient in a totally unused gland assembly, to provide a full complement of rods, joined lightly at one end, all fitting one within each of the bores through the end walls of the sleeves and through the sealing members.

Bores to receive cables of varying configuration can readily be provided, and Figure 3 for example illustrates schematically bores 25 through the sleeve ends and the sealing member 18 of a configuration adapted to take the dual cable 26 required for cable-television provision, comprising a television cable of a coaxial nature connected by means of a web to a telecommunications cable.

In operation, the gland assembly, with the sealing member 18 elastomeric portions 20,21 in a relaxed and expanded condition, and with the sleeves 9,10 separated one from each other, is prepared for use by removing appropriate closure rods 24 and replacing them with cables 22 pushed through the gland assembly, and the main gland body 1 is then faced up to and screwed into the skirt surround 5 to the opening 6 in the wall 7. On screwing in the main gland body 1, the "O" ring seal 16 is compressed in the gap between the inner end 17 of the main gland body 1, the inner periphery of the skirt portion 5 of the wall 7, and the inclined outwardly directed surface 15 of the outer wall of the inner sleeve member 9.

In addition, the screwing in of the main gland body exerts a force in an inner/outer direction on the sealing member 19 and compresses the cylindrical elastomeric portions 20,21 within the two sleeve members 9,10 until the sleeve members are in abutment one with the other.

At this position, the elastomeric portions 20,21, by their elastic flow in all directions, have provided secure seals, at each end of the sealing member 18, about each of the rods 24 and cables 22 passing therethrough.

It will be appreciated that instead of cables, hollow tubes of appropriate wall strength can be used alternatively where there is a requirement for such.

In Figure 4 there is illustrated an alternative to the skirt portion 5 surrounding the opening 6 in the wall 7 as illustrated in Figure 1. In this case a skirt is provided in the form of a double cylinder member 27. This can be mounted directly within a straightforward circular opening 28 in a wall 29 by means of a nut 30 fastened about an externally threaded portion 31 of the double cylinder 27 of a somewhat reduced diameter, sealing of the double cylinder 27 being provided by means of an "O" ring gasket 32. The wider portion 33 of the double cylinder is, as can be seen, directly comparable in dimensions, configuration, and effect, as the skirt surround 5 of Figure 1.

In Figure 5 is illustrated an alternative arrangement of the abutting ends 34,35 of the inner and outer sleeve members 9,10. Thus, here it will be seen that the inner sleeve member 9, for example, is provided with a plurality of peripheral separated digits 36, whilst the outer sleeve member 10 is provided at its inner end with an outwardly tapering inner wall 37 which is arranged, upon screwing in of the main gland body, to bear upon the digitalised end 34 of the inner sleeve member 9, the digits of which are caused thereby to bear inwardly onto an appropriate disposed central elastomer portion of the sealing member 18. Such an arrangement can be of use where, instead of the sealing member comprising a central relatively rigid plastics cylinder with elastomeric cylindrical portions at each end, the sealing member is in totality an elastomeric cylinder throughout its length, or is a succession of rigid portions and elastomeric portions.

By means of the invention we have provided an integral sealing gland assembly capable of being easily fitted with the required number of a plurality of cables or tubes to pass therethrough, and where the sealing effect is readily achieved simply by screwing the main gland body into a skirt or skirt surround at the relevant wall opening, this screwing in being done without any risk of twisting of the relevant plurality of cables or tubes.

It is to be understood that the foregoing description of preferred embodiments is merely exemplary of cable sealing glands in accordance with the invention and that modifications can readily be made thereto without departing from the scope of protection.

## Claims

1. A gland assembly for enabling a plurality of cables and/or tubes to pass through a wall (7) in a sealed manner comprising a hollow main gland body (1) sealingly connectable directly or indirectly to the wall at an opening (6) therein and extending generally transverse, in use, from the plane of the wall, from an inner end to an outer end; an inner disposed sleeve member (9) and outer disposed sleeve member (10) located within the main gland body (1) in line with each other between the inner and outer ends of the main gland body, the inner and outer sleeve members being at least partially closed ended at their inner (13) and outer (11) ends respectively; sealing material (18) disposed within the two sleeve members; the assembly being capable of adjustment to a first disposition such that little or no force in the inner/outer direction is imposed upon the sleeve ends (11,13) which are then in an aligned separated disposition; the main gland body (1), the two sleeve ends (11,13) and the sealing material (18) being capable of having cables and/or tubes (22) passed therethrough between the outer (11) and inner (13) ends thereof when the sleeves (9,10) are in an aligned separated disposition; and the assembly being capable of a further adjustment to a second disposition such that force in the inner/outer direction is imposed upon the sleeve ends (11,13) so as to urge the sleeves together and exert pressure on the sealing material (18) in the inner/outer direction whereby to provide a seal about cables and/or tubes (22) passing therethrough.

2. A gland assembly for enabling a plurality of cables and/or tubes to pass through a wall (7) in a sealed manner comprising a hollow main gland body (1) sealingly connectable directly or indirectly to the wall at an opening (6) therein and extending generally transverse, in use, from the plane of the wall, from an inner end to an outer end; an inner disposed sleeve member (9) and outer disposed sleeve member (10) located within the main gland body (1) in line with each other between the inner and outer end of the main gland body, the inner and outer sleeve members having transverse wall members at their inner (13) and outer (11) ends respectively; the sleeve members enclosing a sealing member (18), at least a portion (20,21) of which, full width across at least one sleeve member, is of elastomeric sealing material; the transverse wall members (11,13) of the sleeve members and the sealing member (18) being provided with bores (23) therethrough in an inner/outer direction; the main gland body (1) being capable of outward movement to a first disposition such that in use little or no force in the inner/outer direction is imposed upon the sleeve ends (11,13) which are thereby in an aligned separated disposition and the elastomer material (20,21) is uncompressed for the insertion of cables and/or tubes (22) in the bores (23); and the main gland body being capable of inward movement to a second disposition such that, in use, force in the inner/outer direction is imposed upon the sleeve ends (11,13) so as to urge the sleeve members (9,10) together and exert pressure on the elastomer sealing material (20,21) in the inner/outer direction to compress the same and provide a seal about the cables and/or tubes (22) passing therethrough.

3. A gland assembly as claimed in Claim 1 or 2 wherein the sleeve members are cylindrical and the seal member (18) comprises a cylinder (20,21) of elastomeric material.

4. A gland assembly as claimed in Claim 1 or 2 wherein the sleeve members are cylindrical and the seal member (18) comprises, along its length, a lamination or succession of elastomeric portions and non-elastomeric relatively rigid portions.

5. A gland assembly as claimed in Claim 1 or 2 wherein the sleeve members are cylindrical and the seal member (18) comprises a plastic central cylinder (19) of relatively rigid material with cylindrical elastomeric portions (20,21) at each end thereof, bonded to the central cylinder (19).

6. A gland assembly as claimed in any one of the preceding claims wherein the main gland body (1) is connectable directly to the wall (7) about the opening therein by means of an upstanding annular skirt portion (5) formed about the opening (6).

7. A gland assembly as claimed in any one of Claims 1 to 5 wherein the main gland body (1) is connectable to a separate upstanding annular skirt member (27) secured within and sealed with respect to a simple opening (28) in the wall (29).

8. A gland assembly as claimed in Claim 6 or 7 wherein the skirt member or skirt portion (33) upstanding from the wall is internally threaded such as to mate with an externally threaded portion (3) of the main gland body (1), the latter being of a right cylindrical nature.

9. A gland assembly as claimed in Claim 8 wherein inward and outward movement of the main gland body (1) is achieved by screwing in or out on the skirt member or skirt portions (5,33).

10. A gland assembly as claimed in any one of claims 6 to 9 wherein the skirt member or skirt portion (5) of the wall is provided with a radially inwardly directed shoulder (14) arranged to bear against the inner sleeve member (9) adjacent the at least partially closed end (13) thereof, and the outer end of the main gland body (1) is provided with a radially inwardly extending shoulder (12) engaging with the at least partially closed end (11) of the outer sleeve member (10).

11. A gland assembly as claimed in Claim 10 wherein the ends (11,13) of the sleeve members (9,10), and the sealing member (18), are pre-drilled with a predetermined number of bores (23), those not required for use at any time being filled, for sealing purposes, with rods (24) passing therealong which can then, in use of the sealing gland, be sealed therewithin.

12. A gland assembly as claimed in any one of claims 6 to 11 wherein the main gland body (1) is sealed against the skirt member or skirt portion (5) of the wall by means of a sealing ring (16) disposed on an outwardly inclined surface (15) around the outer periphery of the inner sleeve member (9), which is engageable by the inner end (17) of the main gland body (1) and the skirt member or skirt portion (5).

13. A gland assembly as claimed in any one of the preceding claims wherein the ends of the sleeve members facing each other may be plain square cut ends for making contact with each other or may be arranged (34,35) for a telescopic sliding arrangement one within the other.

14. A gland assembly as claimed in any one of the preceding claims including means (36,37) provided for applying pressure to the sealing material (18) transverse to the inner/outer direction to the sleeve members (9,10).

15. A gland assembly as claimed in Claim 14 wherein at least a portion of the sealing member (18) is elastomeric, disposed adjacent the junction of the two sleeve members, the two sleeve members having, at their ends (34,35) facing each other, an outwardly tapered inner wall (37) in one and a plurality of peripherally separated, axially extending digits (36) on the other such that upon compression thereof by inward movement of the main gland body (1), the digits (36) of the one sleeve member (9) are engaged by the inclined surface (37) of the other member (10) to bear inwardly into the elastomer of the sealing member (18), and thereby provide radial compression of the sealing member in addition to the axial compression provided by the at least partially closed ends (11,13) of the sleeve members (9,10).

16. A gland assembly as claimed in any one of claims 2 to 15 wherein the bores (23) through the sleeve ends (11,13) and sealing member (18) have an appropriate cross sectional configuration for the cables and/or tubes (22) to be accommodated.

17. A gland assembly as claimed in Claim 16 wherein the configuration in cross section of an array of bores (23) is such through the sealing member as to provide optimum capacity of cable passage with satisfactory sealing properties.

18. A gland assembly as claimed in any one of claims 11 to 17 wherein the rods (24) for sealing unwanted bores (23) are initially formed as plastic rods interconnected at one end fitting within all of the bores provided through the ends of the sleeves and the sealing member, whereby on use of the gland assembly, the required number of rods can be broken away and removed.

## Patentansprüche

1. Stopfbüchsenaufbau zur abgedichteten Durchführung mehrerer Kabel und/oder Rohre durch eine Wand (7) mit den folgenden Merkmalen: ein hohler Hauptstopfbüchsenkörper (1) ist direkt oder indirekt mit der Wand an einer Öffnung (6) derselben festlegbar und erstreckt sich im Gebrauch allgemein quer zur Ebene der Wand, von einem inneren nach einem äußeren Ende; eine innen angeordnete Hülse (9) und eine außen angeordnete Hülse (10) liegen innerhalb des Hauptstopfbüchsenkörpers (1) aufeinander ausgerichtet zwischen den inneren und äußeren Enden des Hauptstopfbüchsenkörpers, wobei die innere und die äußere Hülse wenigstens teilweise an ihrem inneren Ende (13) bzw. ihrem äußeren Ende (11) geschlossen sind; ein Abdichtungsmaterial (18) ist innerhalb der beiden Hülsen angeordnet; der Aufbau ist in der Lage, in einer ersten Stellung derart eingestellt zu werden, daß keine oder nur eine geringe Kraft in Richtung nach innen/außen auf die Enden (11, 13) der Hülsen ausgeübt wird, die dann in einer aufeinander ausgerichteten getrennten Lage befindlich sind; der Hauptstopfbüchsenkörper (1) und die beiden Hülsenenden (11, 13) und das Dichtungsmaterial (18) sind in der Lage, Kabel und/oder Rohre (22) aufzunehmen, die zwischen dem äußeren Ende (11) und dem inneren Ende (13) verlaufen, wenn die Hülsen (9, 10) in der aufeinander ausgerichteten getrennten Lage befindlich sind; der Aufbau ist weiter in der Lage, in einer zweiten Stellung derart eingestellt zu werden, daß die Kraft in Richtung nach innen/außen auf die Hülsenenden (11, 13) so ausgeübt wird, daß die Hülsen zusammengedrückt werden und einen Druck auf das Dichtungsmaterial (18) in Richtung nach innen und außen ausüben, wodurch eine Dichtung um die Kabel und/oder Rohre (22) herbeigeführt wird.

2. Stopfbüchsenaufbau zur abgedichteten Durchführung mehrerer Kabel und/oder Rohre durch eine Wand (7), mit den folgenden Merkmalen: ein hohler Hauptstopfbüchsenkörper (1) ist direkt oder indirekt mit der Wand an einer Öffnung (6) derselben festlegbar und erstreckt sich im Gebrauch allgemein quer zur Ebene der Wand von einem inneren nach einem äußeren Ende; eine innen angeordnete Hülse (9) und eine außen angeordnete Hülse (10) liegen innerhalb des Hauptstopfbüchsenkörpers (1) aufeinander ausgerichtet zwischen dem inneren und dem äußeren Ende des Hauptstopfbüchsenkörpers, wobei die innere und die äußere Hülse jeweils eine Querwand an ihrem inneren Ende (13) bzw. äußeren Ende (11) aufweisen; die Hülsen umschließen einen Dichtungskörper (18), von dem wenigstens ein Teil (20, 21) sich über die volle Breite wenigstens eines Hülsenkörpers erstreckt und aus elastomerem Dichtungsmaterial besteht; die quer verlaufenden Wände (11, 13) der Hülsen und der Dichtungskörper (18) sind mit durchgehenden Kanälen (23) versehen, die sich in Richtung nach innen und außen erstrecken; der Hauptstopfbüchsenkörper (1) kann sich in einer ersten Stellung derart nach außen bewegen, daß im Gebrauch nur eine kleine oder keine Kraft in Richtung innen/außen auf die Hülsenenden (11, 13) aufgebracht wird, die sich dadurch in einer aufeinander ausgerichteten getrennten Lage befinden, und das Elastomermaterial (20, 21) nicht zusammengedrückt ist, so daß die Kabel und/oder Rohre (22) in die Kanäle (23) eingesetzt werden können; und der Hauptstopfbüchsenkörper (1) kann sich nach innen in eine zweite Stellung derart bewegen, daß im Gebrauch eine Kraft in Richtung nach innen und außen auf die Hülsenenden (11, 13) derart ausgeübt wird, daß die Hülsen (9, 10) zusammengepreßt werden und einen Druck auf das elastomere Dichtungsmaterial (20, 21) in Richtung nach innen/außen ausüben, um das Dichtungsmaterial zusammenzupressen und eine Dichtung auf die durchlaufenden Kabel und/oder Rohre (22) herbeizuführen.

3. Stopfbüchsenaufbau nach Anspruch 1 oder 2, bei welchem die Hülsenkörper zylindrisch ausgebildet sind und der Abdichtungskörper (18) aus einem Zylinder (20, 21) aus elastomerem Material besteht.

4. Stopfbüchsenaufbau nach Anspruch 1 oder 2, bei welchem die Hülsen zylindrisch ausgebildet sind und der Dichtungskörper (18) über seine Länge eine Schichtung einer Folge elastomerer Abschnitte und nicht-elastomerer Abschnitte mit relativ starren Abschnitten aufweist.

5. Stopfbüchsenaufbau nach den Ansprüchen 1 oder 2, bei welchem die Hülsen zylindrisch ausgebildet sind und der Dichtungskörper (18) aus einem zentralen Plastikzylinder (19) aus relativ starrem Material besteht, wobei zylindrische elastomere Abschnitte (20, 21) an jedem Ende vorgesehen sind, die mit dem zentralen Zylinder (19) verbunden sind.

6. Stopfbüchsenaufbau nach einem der vorhergehenden Ansprüche, bei welchem der Hauptstopfbüchsenkörper (1) direkt mit der Wand (7) an der Öffnung derselben mittels eines vorstehenden hülsenartigen Abschnitts (5) verbindbar ist, der um die Öffnung (6) herum geformt ist.

7. Stopfbüchsenaufbau nach einem der Ansprüche 1 bis 8, bei welchem der Hauptstopfbüchsenkörper (1) mit einem getrennten vorstehenden ringförmigen Hülsenabschnitt (27) verbindbar ist, der gegenüber einer einfachen Öffnung (28) in der Wand (29) festlegbar ist.

8. Stopfbüchsenaufbau nach einem der Ansprüche 6 oder 7, bei welchem die Hülsen oder Hülsenteile (33), die von der Wand vorstehen, mit einem Innengewinde versehen sind, das mit einem Außengewinde (3) des Hauptstopfbüchsenkörpers (1) zusammenwirkt, wobei letzterer zylindrisch ausgebildet ist.

9. Stopfbüchsenaufbau nach Anspruch 8, bei welchem eine nach innen und außen gerichtete Bewegung des Hauptstopfbüchsenkörpers (1) dadurch erreicht wird, daß der Hülsenkörper oder die Hülsenabschnitte (5, 33) auf- oder abgeschraubt werden.

10. Stopfbüchsenaufbau nach einem der Ansprüche 6 bis 9, bei welchem die Hülse oder die Hülsenabschnitte (5) der Wand mit einer radial nach innen gerichteten Schulter (14) versehen ist, die gegen die innere Hülse (9), benachbart zu dem wenigstens teilweise geschlossenen Ende (13) hiervon lagert, während das äußere Ende des Hauptstopfbüchsenkörpers (1) mit einer nach innen verlaufenden Schulter (12) versehen ist, die wenigstens teilweise an dem geschlossenen Ende (11) der äußeren Hülse (10) angreift.

11. Stopfbüchsenaufbau nach Anspruch 10, bei welchem die Enden (11, 13) der Hülsen (9, 10) und der Dichtungskörper (18) mit einer vorbestimmten Zahl von vorgebohrten Löchern (23) versehen sind, von denen die im Gebrauch nicht erforderlichen Löcher zwecks Abdichtung mit Stopfen (24) versehen sind, die sich im Gebrauch der abgedichteten Stopfbüchse dichtend über deren Länge erstrecken.

12. Stopfbüchsenaufbau nach einem der Ansprüche 6 bis 11, bei welchem der Hauptstopfbüchsenkörper (1) gegenüber der Hülse oder dem Hülsenabschnitt (5) der Wand mittels eines Dichtrings (16) abgedichtet ist, der einer nach außen geneigten Oberfläche (15) anliegt, die sich über den äußeren Umfang der Hülse (9) erstreckt, die von dem inneren Ende (17) des Hauptstopfbüchsenkörpers (1) und der Hülse oder dem Hülsenteil (5) beaufschlagbar ist.

13. Stopfbüchsenaufbau nach einem der vorhergehenden Ansprüche, bei welchem die Enden der Hülsen einander mit rechtwinklig abgeschnittenen Enden gegenüberstehen, um miteinander in Berührung zu gelangen, oder es kann eine teleskopartige Gleitanordnung (34, 35) vorgesehen werden, bei der eine Hülse innerhalb der anderen liegt.

14. Stopfbüchsenaufbau nach einem der vorhergehenden Ansprüche, welcher Mittel (36, 37) aufweist, um einen Druck auf das Dichtungsmaterial (18) quer zur Richtung nach innen/außen auf die Hülse (9, 10) auszuüben.

15. Stopfbüchsenaufbau nach Anspruch 14, bei welchem wenigstens ein Teil des Dichtungskörpers (18) elastomer ausgebildet und benachbart zur Verbindung der beiden Hülsen angeordnet ist, wobei die beiden Hülsen an ihren Enden (34, 35) einander gegenüberliegen und eine nach außen verjüngte Innenwand (37) der einen Hülse mit mehreren in Umfangsrichtung voneinander getrennten, axial verlaufenden Sehnen (36) der anderen Hülse derart zusammenwirkt, daß beim Zusammendrücken bei einer Einwärtsbewegung des Hauptstopfbüchsenkörpers (1) die Sehne (36) der einen Hülse (9) von der geneigten Oberfläche (37) der anderen Hülse (10) so erfaßt wird, daß die Sehne in das Elastomermaterial des Dichtungskörpers (18) eingepreßt wird und dadurch eine radiale Zusammenpressung des Dichtungskörpers zusätzlich zu der axialen Kompression bewirkt, die durch die wenigstens teilweise geschlossenen Enden (11, 13) der Hülsen (9, 10) ausgeübt wird.

16. Stopfbüchsenaufbau nach einem der Ansprüche 2 bis 15, bei welchem die Löcher (23) durch die Enden (11, 13) der Hülsen und der Dichtungskörper (18) eine geeignete Querschnittsausbildung für die Kabel und/oder die Rohre (22) besitzen, um sich diesen anzupassen.

17. Stopfbüchsenaufbau nach Anspruch 16, bei welchem der Querschnitt der Bohrungen (23) derart durch den Dichtungskörper hindurch verläuft, daß eine optimale Kapazität von Kabelkanälen mit zufriedenstellender Dichtungseigenschaft zustande kommt.

18. Stopfbüchsenaufbau nach einem der Ansprüche 11 bis 17, bei welchem die Stopfen (24) zur Abdichtung nicht benötigter Bohrungen (23) anfänglich als Plastikstangen ausgebildet sind, die an einem Ende in sämtliche Bohrungen eingepaßt sind, die durch die Enden der Hülsen und des Dichtungskörpers verlaufen, wobei im Gebrauch des Stopfbüchsenaufbaus die erforderliche Zahl von Stangen abgebrochen und entfernt werden kann.

## Revendications

1. Ensemble de traversée destiné à permettre le passage, d'une manière étanche, d'une pluralité de câbles et/ou de tubes à travers une paroi (7), comprenant un corps principal de traversée (1) creux pouvant être relié d'une manière étanche, directement ou indirectement, à la paroi, à l'endroit d'une ouverture (6) prévue dans cette paroi, et s'étendant d'une manière générale, en cours d'utilisation, dans le sens transversal à partir du plan de la paroi, d'une extrémité interne à une extrémité externe, un manchon (9) disposé intérieurement et un manchon (10) disposé extérieurement lesquels sont logés à l'intérieur du corps principal de traversée (1), en étant alignés l'un avec l'autre, entre les extrémités interne et externe du corps principal de traversée (1), les manchons interne et externe étant fermés au moins partiellement respectivement à l'endroit de leurs extrémités interne (13) et externe (11), un matériau d'étanchéité (18) disposé dans les deux manchons, l'ensemble étant capable d'être ajusté dans une première disposition telle qu'une force faible ou nulle soit appliquée, dans la direction interne/externe, aux extrémités (11,13) des manchons qui se trouvent alors dans une disposition séparée en étant alignées, le corps principal de traversée (1), les deux extrémités (11,13) des manchons et le matériau d'étanchéité (18) étant capables d'être traversés par des câbles et/ou tubes (22), entre leurs extrémités externe (11) et interne (13), lorsque les manchons (9,10) se trouvent dans une disposition séparée mais alignée, l'ensemble étant capable d'être ajusté dans une seconde disposition telle qu'une force soit appliquée, dans la direction interne/externe, sur les extrémités (11,13) des manchons de manière à solliciter conjointement les manchons et à exercer une pression sur le matériau d'étanchéité (18) dans la direction interne/externe, pour créer un joint étanche autour des câbles et/ou tubes (22) passant à travers le matériau d'étanchéité (18).

2. Ensemble de traversée destiné à permettre le passage, d'une manière étanche, d'une pluralité de câbles et/ou de tubes à travers une paroi (7), comprenant un corps principal de traversée (1) creux pouvant être relié d'une manière étanche, directement ou indirectement, à la paroi, à l'endroit d'une ouverture (6) prévue dans cette paroi, et s'étendant d'une manière générale, en cours d'utilisation, dans le sens transversal à partir du plan de la paroi, d'une extrémité interne à une extrémité externe, un manchon (9) disposé intérieurement et un manchon (10) disposé extérieurement lesquels sont logés à l'intérieur du corps principal de traversée (1), en étant alignés l'un avec l'autre, entre les extrémités interne et externe du corps principal de traversée, les manchons interne et externe présentant des parois transversales respectivement à leurs extrémités interne (13) et externe (11), les manchons enfermant un élément d'étanchéité (18) dont au moins une portion (20,21) est constituée, sur la totalité de la largeur en travers d'au moins un manchon, d'un matériau d'étanchéité en élastomère, les parois transversales (11,13) des manchons et l'élément d'étanchéité (18) étant traversés de trous (23) dans une direction interne/externe, le corps principal de traversée (1) étant capable d'effectuer un mouvement vers l'extérieur en direction d'une première disposition telle qu'en cours d'utilisation une force faible ou nulle soit appliquée, dans la direction interne/externe, aux extrémités (11,13) des manchons qui se trouvent alors dans une disposition séparée en étant alignées, et le matériau en élastomère (20,21) n'est pas comprimé pour permettre l'insertion de câbles et/ou tubes (22) dans les trous (23), et le corps principal de traversée (1) étant capable d'effectuer un mouvement vers l'intérieur en direction d'une seconde disposition telle qu'en cours d'utilisation une force soit appliquée, dans la direction interne/externe, sur les extrémités (11,13) des manchons de manière à solliciter conjointement les manchons (9,10) et à exercer une pression sur le matériau d'étanchéité (20,21) en élastomère dans la direction intern/externe, afin de comprimer le matériau d'étanchéité et créer un joint étanche autour des câbles et/ou tubes (22) passant à travers le matériau d'étanchéité.

3. Ensemble de traversée suivant l'une quelconque des revendications 1 ou 2 caractérisé en ce que les manchons sont cylindriques et l'élément d'étanchéité (18) est constitué par un cylindre (20,21) en élastomère.

4. Ensemble de traversée suivant l'une quelconque des revendications 1 ou 2 caractérisé en ce que les manchons sont cylindriques et l'élément d'étanchéité (18) est constitué, suivant sa longueur, par un stratifié ou une succession de portions en élastomère et de portions relativement rigides qui ne sont pas en élastomère.

5. Ensemble de traversée suivant l'une quelconque des revendications 1 ou 2 caractérisé en ce que les manchons sont cylindriques et l'élément d'étanchéité (18) est constitué par un cylindre central (19) en matière plastique, en un matériau relativement rigide, pourvu, à chacune de ses extrémités, de portions cylindriques en élastomère (20,21), qui sont liées au cylindre central (19).

6. Ensemble de traversée suivant l'une quelconque des revendications précédentes caractérisé en ce que le corps principal de traversée (1) peut être connecté directement à la paroi (7), autour de l'ouverture prévue dans cette paroi au moyen d'une portion annulaire (5) en forme de jupe, se dressant perpendiculairement, formée autour de l'ouverture (6).

7. Ensemble de traversée suivant l'une quelconque des revendications 1 à 5 caractérisé en ce que le corps principal de traversée (1) peut être relié à un élément séparé (27), à jupe annulaire, se dressant perpendiculairement, fixé dans une simple ouverture (12) dans la paroi (29) et étanché par rapport à cette ouverture.

8. Ensemble de traversée suivant l'une quelconque des revendications 6 ou 7 caractérisé en ce que l'élément à jupe ou la portion en forme de jupe (33), se dressant perpendiculairement à partir de la paroi, présente un filetage interne de manière à pouvoir s'accoupler avec une portion à filetage externe (3) du corps principal de traversée (1), ce dernier étant d'un type tout à fait cylindrique.

9. Ensemble de traversée suivant la revendication 8 caractérisé en ce que le mouvement du corps principal de traversée (1) vers l'intérieur et vers l'extérieur est réalisé en le vissant ou le dévissant par rapport à l'élément à jupe ou aux portions en forme de jupe (5,33).

10. Ensemble de traversée suivant l'une quelconque des revendications 6 à 9 caractérisé en ce que l'élément à jupe ou la portion en forme de jupe (5) de la paroi est pourvu d'un épaulement (14) dirigé vers l'intérieur dans le sens radial, agencé de manière à être appliqué contre le manchon interne (9) à proximité immédiate de son extrémité (13) au moins partiellement fermée, et l'extrémité externe du corps principal de traversée (1) est pourvue d'un épaulement (12) s'étendant vers l'intérieur dans le sens radial et venant en contact avec l'extrémité (11), au moins partiellement fermée, du manchon externe (10).

11. Ensemble de traversée suivant la revendication 10 caractérisé en ce que les extrémités (11, 13) des manchons (9,10) et l'élément d'étanchéité (18) sont prépercés d'un nombre prédéterminé de trous (23), ceux de ces trous dont l'utilisation n'est pas exigée à un instant quelconque, étant obturés, pour des raisons d'étanchement, au moyen de tiges (24) passant le long de ces trous et qui peuvent être ensuite étanchées dans ces trous lors de l'utilisation de la traversée étanche.

12. Ensemble de traversée suivant l'une quelconque des revendications 6 à 11 caractérisé en ce que le corps principal de traversée (1) est rendu étanche par rapport à l'élément à jupe ou la portion en forme de jupe (5) de la paroi au moyen d'une bague d'étanchéité (16) disposée sur une surface (15) inclinée vers l'extérieur, s'étendant autour de la périphérie extérieure du manchon interne (9) et avec laquelle peut venir en contact l'extrémité interne (17) du corps principal de traversée (1) et l'élément à jupe ou la portion en forme de jupe (5).

13. Ensemble de traversée suivant l'une quelconque des revendications précédentes caractérisé en ce que les extrémités des manchons qui se font face l'une l'autre peuvent être des extrémités lisses à coupe perpendiculaire pour établir un contact l'une avec l'autre ou bien elles peuvent être agencées (34,35) de manière à permettre un montage à glissement télescopique l'une dans l'autre.

14. Ensemble de traversée suivant l'une quelconque des revendications précédentes caractérisé en ce qu'il comporte des moyens (36,37) pour appliquer une pression, au matériau d'étanchéité (18), dans le sens transversal par rapport à la direction interne/externe des manchons (9,10).

15. Ensemble de traversée suivant la revendication 14 caractérisé en ce qu'au moins une portion de l'élément d'étanchéité (18) est en élastomère, elle est disposée à proximité immédiate de la jonction des deux manchons, ces deux manchons présentant, à leurs extrémités (34,35) se faisant face, une paroi interne (37), evasée vers l'extérieur, sur l'un des manchons et une pluralité de doigts (36) s'étendant axialement, séparés les uns des autres dans le sens périphérique, sur l'autre manchon de telle façon que, lors de leur compression résultant du mouvement vers l'intérieur du corps principal de traversée (1), les doigts (36) de l'un des manchons (9) soient rencontrés par la surface inclinée (37) de l'autre manchon (10) afin d'être pressés vers l'intérieur dans l'élastomère de l'élément d'étanchéité (18) et d'assurer ainsi une compression radiale de l'élément d'étanchéité en plus de sa compression axiale réalisée par les extrémités (11,13), au moins partiellement fermées, des manchons (9,10).

16. Ensemble de traversée suivant l'une quelconque des revendications 2 à 15 caractérisé en ce que les trous (23) percés à travers les extrémités (11,13) des manchons et l'élément d'étanchéité (18) ont une forme de section transversale appropriée et correspondant aux câbles et/ou tubes (22) devant passer à travers eux.

17. Ensemble de traversée suivant la revendication 16 caractérisé en ce que la configuration, en section transversale, d'une série de trous (23), à travers l'élément d'étanchéité, est telle qu'elle assure une capacité optimale pour le passage des câbles en ayant des propriétés d'étanchement satisfaisantes.

18. Ensemble de traversée suivant l'une quelconque des revendications 11 à 17 caractérisé en ce que les tiges (24) utilisées pour obturer d'une manière étanche les trous (23) indésirables sont formées initialement en tant que tiges de matière plastique interconnectées à une extrémité et s'emboîtant dans tous les trous prévus à travers les extrémités des manchons et l'élément d'étanchéité de telle façon que, lors de l'utilisation de l'ensemble de la traversée, le nombre requis de tiges puissent être cassées et enlevées.
